# EUROPÄISCHE PATENTSCHRIFT

(11) **EP 4 175 865 B1**
(45) Veröffentlichungstag und Bekanntmachung des Hinweises auf die Patenterteilung: **01.05.2024**
(21) Anmeldenummer: 21739306.5
(22) Anmeldetag: 29.06.2021
(51) Int. Cl.: B62D 1/181

(54) **LENKSÄULE FÜR EIN KRAFTFAHRZEUG**
STEERING COLUMN FOR A MOTOR VEHICLE
COLONNE DE DIRECTION POUR VÉHICULE AUTOMOBILE

(30) Priorität: 02.07.2020 DE 102020117447
(43) Veröffentlichungstag der Anmeldung: 10.05.2023
(73) Patentinhaber: thyssenkrupp Presta AG, 9492 Eschen (LI); thyssenkrupp AG, 45143 Essen (DE)
(72) Erfinder: BLÄTTLER, Simon, 9472 Grabs (CH); HUBER, Sebastian, 6811 Göfis (AT); SPECHT, Jean-Pierre, 9469 Haag (CH); BAYER, Tim, 9450 Lüchingen (CH)
(74) Vertreter: thyssenkrupp Intellectual Property GmbH
(86) Internationale Anmeldenummer: PCT/EP2021/067761
(87) Internationale Veröffentlichungsnummer: WO 2022/002886

(56) Entgegenhaltungen:
- DE-B3-102018 212 696

## Beschreibung

### Stand der Technik

Die Erfindung betrifft einen Verstellantrieb für eine motorisch verstellbare Lenksäule für ein Kraftfahrzeug, umfassend eine Außen-Gewindespindel, die ein Außengewinde aufweist, in das eine Spindelmutter eingreift, und die ein Innengewinde aufweist, in das eine Innen-Gewindespindel eingreift, wobei die Spindelmutter, die Außen-Gewindespindel und die Innen-Gewindespindel von einer motorischen Antriebseinheit relativ zueinander um eine Achse drehend antreibbar sind. Weiterhin betrifft die Erfindung eine Lenksäule für ein Kraftfahrzeug und ein Verfahren zum Betrieb eines Verstellantriebs.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist um ihre Längsachse in einem Mantelrohr einer Stelleinheit drehbar gelagert, die von einer Trageinheit an der Fahrzeugkarosserie gehalten ist. Dadurch, dass die Stelleinheit zumindest ein Mantelrohr aufweist, welches in einer mit der Trageinheit verbundenen Manteleinheit, auch als Führungskasten oder Kastenschwinge bezeichnet, in Richtung der Längsachse teleskopartig verschiebbar ist, kann eine Längsverstellung des Lenkrads relativ zur Karosserie erfolgen. Eine Höhenverstellung kann dadurch realisiert werden, dass die Stelleinheit oder eine diese aufnehmende Manteleinheit schwenkbar an der Trageinheit gelagert ist. Die Verstellung der Stelleinheit in Längs- bzw. Höhenrichtung ermöglicht die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann.

Bei motorisch verstellbaren Lenksäulen ist es bekannt, zur Verstellung einen motorischen Verstellantrieb mit einer Antriebseinheit vorzusehen, die einen elektrischen Antriebsmotor umfasst, der einen Spindeltrieb mit einer in eine Spindelmutter eingeschraubten Gewindespindel antreibt. Durch die Antriebseinheit sind die Gewindespindel und die Spindelmutter gegeneinander um ihre gemeinsame Achse, die Gewindespindelachse oder Spindelachse, drehend antreibbar, wodurch die Gewindespindel und die Spindelmutterje nach Drehrichtung in Richtung der Gewindespindelachse translatorisch aufeinander zu oder voneinander weg bewegt werden können. Dadurch, dass die Gewindespindel und die Spindelmutter an relativ zueinander verstellbaren Teilen der Lenksäule in Richtung der Achse abgestützt angebracht sind, beispielsweise an in Achsrichtung teleskopierbaren Mantelrohren einer Manteleinheit oder an einer Manteleinheit und einer Trageinheit, kann eine Längs- oder Höhenverstellung erfolgen.

In einer als Tauchspindelantrieb bekannten Ausführungsform ist die Gewindespindel bezüglich Drehung um die Achse mit einem feststehenden Teil der Lenksäule, beispielsweise der an der Karosserie festgelegten Trageinheit, der Manteleinheit oder einem Mantelrohr, unverdrehbar gekoppelt und die Spindelmutter ist drehend antreibbar, und axial an einem relativ dazu verstellbaren Teil der Lenksäule abgestützt. Durch drehenden Antrieb der Spindelmutter kann eine translatorische Bewegung relativ zur Gewindespindel bewirkt werden, wodurch die über den Spindeltrieb verbundenen Teile der Lenksäule relativ zueinander verstellt werden können. Eine Lenksäule mit einem derartigen Verstellantrieb ist beispielsweise in der DE 10 2017 207 561 A1 beschrieben.

Alternativ kann in einer als Rotationsspindelantrieb bekannten Ausführung die Gewindespindel relativ zur Lenksäule drehend antreibbar sein, und die Spindelmutter bezüglich Rotation um die Spindelachse feststehend.

Der maximal realisierbare Verstellweg ist bei einem einfachen Rotations- oder Spindelantrieb durch die Länge der Gewindespindel begrenzt. Um größere Verstellungen realisieren zu können, beispielsweise um im autonomen Fahrbetrieb das Lenkrad außerhalb des manuellen Bedien- oder Komfortbereichs zu verstauen, sind entsprechend lange Gewindespindeln erforderlich. Um diese Begrenzung zu überwinden, ist in der DE 10 2018 212 696 B3 ein gattungsgemäßer mehrstufiger Verstellantrieb mit einer teleskopartig geschachtelten Anordnung von zwei Spindeltrieben vorgeschlagen worden. Dabei ist eine erste bzw. äußere Gewindespindel, nachfolgend als Außen-Gewindespindel bezeichnet, als Hohlspindel ausgebildet, mit einem zu einem Außengewinde koaxialen Innengewinde, in welches eine an der Lenksäule drehfest abgestützte Innen-Gewindespindel eingreift. Dadurch wird ein erster Spindeltrieb ausgebildet. Mit ihrem Außengewinde greift die Außen-Gewindespindel in eine von dem Antriebsmotor drehend antreibbare, axial an der Antriebseinheit abgestützte Spindelmutter, auch als Antriebsmutter bezeichnet, ein. Dadurch wird ein zweiter Spindeltrieb ausgebildet.

Bei Aktivierung der Antriebseinheit wird die Spindelmutter relativ zu der mehrstufigen Anordnung der beiden Gewindespindeln rotiert. Dadurch, dass nur die Innen-Gewindespindel definiert drehfest abgestützt ist, können verschiedene Betriebszustände auftreten, bei denen entweder die Außen-Gewindespindel mit der Spindelmutter mitrotiert, wobei der erste Spindeltrieb aktiv ist, oder mit der Innen-Gewindespindel mitrotiert, so dass der zweite Spindeltrieb aktiv ist, oder auch teilweise gleichzeitig mit der Außen- und Innen-Gewindespindel, so dass beide Spindeltriebe aktiv sind. Welche Betriebszustände beim Verstellen tatsächlich auftreten, ist dabei von der Gewindereibung abhängig, die wiederum von verschiedenen Parametern wie Toleranzen, Temperatur, Oberflächeneigenschaften und dergleichen abhängt. Nachteilig daran ist, dass bei Verstellen nicht definiert ist, wann welcher Spindeltrieb aktiviert ist. Dadurch kann das Verstellverhalten haptisch und akustisch beeinträchtigt werden, insbesondere dahingehend, dass sich nicht jeder Verstellvorgang gleich anfühlt und/oder anhört, da bei einem ersten Verstellvorgang zuerst der eine und dann der andere Spindeltrieb aktiviert ist und bei dem darauf folgenden Verstellvorgang die Reihenfolge umgekehrt zu der zuvor genannten Reihenfolge ist. Es zeigte sich, dass Fahrzeugführer insbesondere von Oberklassefahrzeugen dies als störend, unangenehm und nicht ausreichend wertig empfinden. Weiters ist die Gestaltungsfreiheit eingeschränkt, da beide Spindeltriebe dieselben Übertragungseigenschaften bezüglich Umsetzung der relativen Rotation in eine axiale Bewegung aufweisen müssen.

Angesichts der vorangehend erläuterten Problematik ist es eine Aufgabe der vorliegenden Erfindung, das Verstellverhalten insbesondere bezüglich der Haptik und der Akustik zu verbessern und die Gestaltungsfreiheit zu vergrößern.

### Darstellung der Erfindung

Diese Aufgabe wird erfindungsgemäß gelöst durch einen Verstellantrieb mit den Merkmalen des Anspruchs 1, einer Lenksäule gemäß Anspruch 12 sowie den Verfahren gemäß Anspruch 13 und Anspruch 15. Vorteilhafte Weiterbildungen ergeben sich aus den Unteransprüchen.

Bei einem Verstellantrieb für eine motorisch verstellbare Lenksäule für ein Kraftfahrzeug, umfassend eine Außen-Gewindespindel, die ein Außengewinde aufweist, das in eine Spindelmutter eingreift, und die ein Innengewinde aufweist, in das eine Innen-Gewindespindel eingreift, wobei die Spindelmutter, die Außen-Gewindespindel und die Innen-Gewindespindel von einer motorischen Antriebseinheit relativ zueinander um eine Achse drehend antreibbar sind, ist erfindungsgemäß eine Sperreinrichtung vorgesehen, die umschaltbar ist zwischen einer ersten Stellung und einer zweiten Stellung, wobei in der ersten Stellung die Außen-Gewindespindel mit der Spindelmutter drehfest verriegelt ist, und in der zweiten Stellung die Außen-Gewindespindel mit der Innen-Gewindespindel drehfest verriegelt ist.

Durch die erfindungsgemäße Sperreinrichtung kann bei einem mehrstufigen Verstellantrieb wahlweise entweder die erste oder die zweite Stellung definiert eingeschaltet werden, wodurch jeweils ein Betriebsmodus des mehrstufigen Spindeltriebs klar und eindeutig definiert ist.

In der ersten Stellung, auch als äußere Sperrstellung oder Außensperrstellung bezeichnet, die einem ersten Betriebsmodus entspricht, ist die Außen-Gewindespindel mit der Spindelmutter durch die Sperreinrichtung derart in beiden Drehrichtungen drehfest verriegelt, so dass eine in beide Drehrichtungen wirksame drehschlüssige Kupplung erfolgt. Diese erste Stellung kann beispielsweise in einem Verstau-Verstellbereich, oder kurz Verstaubereich, eingeschaltet sein, der den Verstellbereich zwischen der Verstauposition und einem Komfort- oder Bedienbereich der Lenksäule bezeichnet, und der beim Einfahren in die Verstauposition in einer Vorwärts-Verstellrichtung, oder dazu entgegengesetzt beim Ausfahren aus der Verstauposition in einer Rückwärts-Verstellrichtung durchlaufen wird. Die drehfeste Verriegelung bleibt in beiden möglichen Drehrichtungen und damit in beiden möglichen Verstellrichtungen solange bestehen, wie die erste Stellung eingeschaltet ist, also bevorzugt über den gesamten Verstaubereich.

Durch die Antriebseinheit wird in dieser ersten Stellung die Spindelmutter zusammen mit der damit gekuppelten Außen-Gewindespindel drehend angetrieben. Dadurch ist ausschließlich der durch die Außen-Gewindespindel zusammen mit der Innen-Gewindespindel gebildete erste Spindeltrieb aktiv.

Wird die Sperreinrichtung von der ersten in die zweite Stellung, die auch als innere Sperrstellung oder Innensperrstellung bezeichnet werden kann, umgeschaltet, wird die drehfeste Verbindung zwischen Spindelmutter und Außen-Gewindespindel gelöst, und die Innen-Gewindespindel mit der Außen-Gewindespindel in beide Drehrichtungen drehfest verriegelt, also unverdrehbar verbunden. Dadurch ist der erste Spindeltrieb deaktiviert, und der aus der Spindelmutter und der Außen-Gewindespindel gebildete zweite Spindeltrieb aktiviert. Beim drehenden Antrieb der Spindelmutter wird, abhängig von der Drehrichtung, die Außen-Gewindespindel samt der darin festgelegten Innen-Gewindespindel entweder in Vorwärts- oder Rückwärts-Verstellrichtung linear axial verlagert. Der erste Spindeltrieb ist während des gesamten durch den zweiten abgedeckten Verstellbereichs, beispielsweise des Komfort-Verstellbereichs zur Anpassung der Bedienposition des Lenkrads im Bedienbereich, durch die Sperreinrichtung gesperrt und inaktiv.

Dank der Erfindung ist es erstmals möglich, bei einem mehrstufigen Spindeltrieb kontrolliert entweder ausschließlich den ersten oder den zweiten Spindeltrieb zur Verstellung zu aktivieren. Daraus resultiert der Vorteil, dass kein undefinierter, gemischter Betriebsmodus wie im Stand der Technik auftreten kann, so dass das Verstellverhalten hinsichtlich der haptischen und akustischen Eigenschaften gegenüber dem Stand der Technik deutlich verbessert ist. Die Funktion ist eindeutig und unabhängig von der Gewindereibung. Ein weiterer wesentlicher Vorteil resultiert daraus, dass die Übersetzungsverhältnisse, welche das Verhältnis zwischen Rotations- und axialer Linearbewegung der beiden Spindeltriebe angeben, unabhängig voneinander vorgegeben werden können. Die wird dadurch ermöglicht, dass innerhalb eines durch die erste oder zweite Stellung definierten Betriebsmodus keine undefinierte Überlagerung der Bewegungen wie im Stand der Technik erfolgen kann. Dadurch wird eine größere Designfreiheit ermöglicht, so kann beispielsweise für eine gegebene Drehzahl des Antriebs im Verstaubereich durch eine größere Gewindesteigung eine schnellere Verstellung als im Komfortbereich vorgegeben werden.

Das Außengewinde der Außen-Gewindespindel und das Innengewinde der Außen-Gewindespindel sind bevorzugt koaxial zueinander.

Bei einer vorteilhaften Ausgestaltung kann vorgesehen sein, dass die Sperreinrichtung mit der Spindelmutter, der Außen-Gewindespindel und der Innen-Gewindespindel zusammenwirkt, um an einer vorbestimmten Relativposition aus einer Vorwärts-Verstellrichtung von der zweiten Stellung in die erste Stellung umgeschaltet zu werden, und an der Relativposition aus einer der Vorwärts-Verstellrichtung entgegengesetzten Rückwärts-Verstellrichtung von der ersten Stellung in die zweite Stellung umgeschaltet zu werden. Die zum Umschalten vorbestimmte Relativposition wird auch als Umschaltposition bezeichnet. In dieser Ausführung kann die Umschaltung der Sperreinrichtung selbsttätig erfolgen, wenn die beim Einfahren der Lenksäule in Vorwärts-Verstellrichtung aus dem Komfortbereich in den Verstaubereich verstellt wird, und umgekehrt beim Ausfahren aus dem Verstaubereich in den Komfortbereich in Rückwärts-Verstellrichtung verstellt wird, jeweils beim Erreichen der Umschaltposition oder beim Verstellen über die Umschaltposition hinweg. Dann erfolgt jeweils eine Betätigung der Sperreinrichtung durch die Relativbewegung der Spindelmutter mit der Außen-Gewindespindel und der Außen-Gewindespindel mit der Innen-Gewindespindel. Zur Betätigung können geeignete Betätigungsmittel vorgesehen sein, die beispielsweise mechanische Zwangsführungen oder dergleichen aufweisen können. Diese können derart ausgestaltet und eingerichtet sein, dass die Sperreinrichtung innerhalb der Verstellung innerhalb des Komfort- oder Verstaubereichs jeweils in der zugeordneten ersten oder zweiten Stellung gehalten wird, und nicht umgeschaltet werden kann. Das Umschalten kann zwangsgesteuert in die eine oder andere Stellung erfolgen, wenn die als Umschaltposition vorbestimmte Relativposition der Gewindespindeln am Übergang zwischen Komfort- und Verstaubereich in der einen oder der entgegengesetzten Verstellrichtung erreicht oder überschritten wird. Ein Vorteil ist, dass dadurch immer einer der beiden Spindeltriebe einem Verstellbereich definiert zugeordnet wird, und somit eine eindeutig definierte Reihenfolge der Aktivierung der Spindeltriebe automatisiert festgelegt wird.

Es ist beispielsweise möglich, dass die Sperreinrichtung ein zwischen der ersten Stellung und der zweiten Stellung verlagerbares Riegelelement aufweist. Das Riegelelement kann wahlweise mechanisch zwischen den Stellungen bewegt und dadurch umgeschaltet werden. In der ersten Stellung verbindet es die Außen-Gewindespindel drehfest mit der Spindelmutter, in der zweiten Stellung mit der Innen-Gewindespindel. Ein bewegliches Riegelelement kann mit geringem Aufwand funktionssicher realisiert werden.

Bevorzugt weist das Riegelelement eine Steuerfläche auf, die mit einer Gegensteuerfläche zusammenwirkt und ein kurvengetriebeartigen Steuermechanismus bildet. Es können ein oder mehrere Gegensteuerflächen vorgesehen sein. Die Gegensteuerfläche kann bevorzugt an der Innen-Gewindespindel und/oder an der Spindelmutter vorgesehen sein. Dieser kurvengetriebeartigen Steuermechanismus überführt das Riegelelement von der ersten Stellung in die zweite Stellung oder umgekehrt.

Eine vorteilhafte Weiterbildung kann sein, dass das Riegelelement an der Außen-Gewindespindel bewegbar gelagert ist und wahlweise in Riegeleingriff bringbar ist mit einer Riegelaufnahme oder einer Riegelaufnahme der Spindelmutter. Das Riegelelement ist dabei an der Außen-Gewindespindel gelagert und axial abgestützt. Es wird bei einer Relativbewegung mit der Außen-Gewindespindel mitbewegt, und kann an einer jeweils als Umschaltposition festgelegten Relativposition in eine der Riegelaufnahmen zur Erzeugung eines axial wirksamen Formschlusses eingreifen. Es kann beispielsweise in der ersten Stellung radial nach außen vorstehen, so dass es von innen in der Spindelmutter in eine Riegelaufnahme, die äußere oder Außenriegelaufnahme, formschlüssig eingreift. Um es in die zweite Stellung zu bringen, wird es radial quer zur Achse nach innen bewegt, so dass es formschlüssig in die außen an der Innen-Gewindespindel angeordnete Riegelaufnahme, die innere oder Innenriegelaufnahme, eingreift. Ein Riegelelement kann als derartiger mechanischer Sperrriegel einfach und zuverlässig ausgebildet werden, wobei die Formschlussverbindung mechanisch einfach darstellbar ist und eine stabile Sperrwirkung hat. Ein weiterer Vorteil ist, dass das Riegelelement raumsparend und geschützt zwischen der Innen-Gewindespindel und der Spindelmutter untergebracht sein kann.

Eine Riegelaufnahme kann beispielsweise eine in der Spindelmutter und/oder der Innen-Gewindespindel eingebrachte Vertiefung aufweisen. Die Vertiefung kann einfach durch eine in axialer Richtung begrenzte Aussparung, Öffnung, Nut oder dergleichen ausgebildet ist, in welche ein Riegelelement in radialer Richtung zur Ausbildung einer in axialer Richtung wirksamen Formschlussverbindung eingebracht werden kann. Eine derartige Vertiefung kann mit geringem Aufwand eingeformt werden, beispielsweise radial von innen im Bereich des Innengewindes der Spindelmutter oder radial von außen im Bereich des Außengewindes der Innen-Gewindespindel. Bevorzugt weisen die Vertiefungen die Gegensteuerfläche oder die Gegensteuerflächen auf.

In einer vorteilhaften Ausführung ist es möglich, dass das Riegelelement in einem Durchbruch der Außen-Gewindespindel angeordnet ist. Der Durchbruch durchsetzt die Außengewindespindel radial, und bildet eine radial zwischen Innen-Gewindespindel und Spindelmutter durchgehende Öffnung. Darin ist das Riegelelement axial abgestützt, radial beweglich gelagert. Das Riegelelement kann als Riegelkörper beispielsweise eine Kugel aufweisen, die so bemessen ist, dass sie in jedem Betriebsmodus entweder nach innen oder nach außen von der Außen-Gewindespindel radial vorsteht. Dadurch kann sie nur zwei Betriebsstellungen einnehmen, wobei sie in der ersten Stellung von innen in die Außenriegelaufnahme eingreift, und in der zweiten Stellung von außen in die Innenriegelaufnahme. Dadurch, dass der Riegelkörper Untermaß zum Querschnitt des Durchbruchs hat, beispielsweise die Kugel einen kleineren Durchmesser hat, kann sie zum Umschalten zwischen der ersten und der zweiten Stellung einfach in dem Durchbruch radial hin und her bewegt werden. Diese Ausführung der Sperreinrichtung kann überaus einfach und dabei zuverlässig und raumsparend realisiert werden.

Um eine selbsttätige Umschaltung der Sperreinrichtung beim Verstellen zu bewirken, kann vorgesehen sein, dass die Spindelmutter ein erstes Betätigungsmittel aufweist, welches eingerichtet ist, um das Riegelelement von der ersten in die zweite Stellung umzuschalten, und die Innen-Gewindespindel ein zweites Betätigungsmittel aufweist, welches eingerichtet ist, um das Riegelelement von der zweiten in die erste Stellung umzuschalten. Das erste Betätigungsmittel bewirkt bei einer axialen Relativbewegung der Spindelmutter zur Außen-Gewindespindel an einer vorgegebenen Relativposition, der Umschaltposition, eine radiale Bewegung zum Umschalten des Riegelelements, und das zweite Betätigungsmittel bewirkt bei einer axialen Relativbewegung der Außen- zur Innengewindespindel an einer vorgegebenen Relativposition eine radiale Bewegung zum entgegengesetzten Umschaltung des Riegelelements. Ein Betätigungsmittel kann beispielsweise eine in axialer Richtung gegen die Achse geneigte Umschaltschräge umfassen, durch welche eine axiale Relativbewegung aufgrund der Keilwirkung eine radiale Verlagerung zum Umschalten des Riegelelements bewirkt, beispielsweise eine radiale Verlagerung einer in einem Durchbruch der Außen-Gewindespindel angeordneten Kugel.

Es ist möglich, dass die Außen-Gewindespindel ein in axialer Richtung gegen die Spindelmutter in Anschlag bringbares Begrenzungsmittel aufweist. Das Begrezungsmittel kann einen radial nach außen über das Außengewinde vorstehenden axialen Anschlag aufweisen, beispielsweise einen Vorsprung oder einen ringfömigen Kragen, der als Endanschlag beim Erreichen der maximal möglichen Verstellung axial an der Spindelmutter anschlagen kann. Insbesondere kann die Anschlagposition zusammenfallen mir der oben genannten Relativposition, in welcher die Sperreinrichtung sich in der zweiten Stellung befindet, in der Innen- und Außen-Gewindespindel durch das Riegelelement drehfest verriegelt und in beiden Drehrichtungen formschlüssig miteinander gekoppelt sind.

Durch die Erfindung ergibt sich die vorteilhafte Möglichkeit, dass das Außengewinde der Außen-Gewindespindel eine von dem Innengewinde der Außen-Gewindespindel unterschiedliche Steigung hat. Es kann beispielsweise vorgesehen sein, dass das Innengewinde eine größere Steigung als das Außengewinde hat. Dadurch hat der erste Spindeltrieb eine grö-ßere Übersetzung, so dass wie oben beschrieben für eine gegebene Drehzahl des Antriebs ein schnelle Verstellbewegung im Verstaubereich erzeugt werden kann. Dazu kann die Innen-Gewindespindel beispielsweise ein mehrgängiges Steilgewinde aufweisen. Dagegen kann durch eine geringere Steigung des Außengewindes der Außen-Gewindespindel eine langsamere und genauere Verstellung im Komfortbereich erfolgen. Dadurch wird die Designfreiheit zur Anpassung des Verstellantriebs an die individuellen Anforderungen deutlich erhöht.

In einer vorteilhaften Weiterbildung kann es vorgesehen sein, dass die Spindelmutter und/oder die Außen-Gewindespindel und/oder die Innen-Gewindespindel einen Kunststoff umfasst oder aus einem solchen gebildet ist.

Es kann mit Vorteil vorgesehen sein, dass mindestens eines der Gewinde selbsthemmend ausgestaltet ist. Dadurch, dass beispielsweise das Außengewinde der Außen-Gewindespindel im Komfortbereich durch eine relativ geringe Gewindesteigung selbsthemmend ist, kann sichergestellt werden, dass auch durch hohe auf den Verstellantrieb wirkende Axialkräfte keine Verstellung der eingestellten Lenkradposition erfolgt.

Die Erfindung umfasst weiterhin eine Lenksäule für ein Kraftfahrzeug, umfassend einen Verstellantrieb, der eines oder mehrere der vorangehend beschriebenen Merkmale aufweist, und der zwischen axial relativ zueinander teleskopartig verstellbaren, eine Lenkspindel drehbar lagernden Mänteln oder Mantelrohren einer Manteleinheit angeordnet ist und/oder zwischen einer mit der Karosserie des Kraftfahrzeugs verbindbaren Trageinheit und einer eine Lenkspindel drehbar aufnehmenden Manteleinheit angeordnet ist. Durch die teleskopartige Verstellung der Mantelrohre kann eine Längsverstellung in Richtung der Längsachse der Lenkspindel realisiert werden, und durch die Anordnung zwischen Trageinheit und Manteleinheit eine Höhenverstellung. Längs- und Höhenverstellung können einzeln oder in Kombination vorgesehen sein. Vorteile durch Einsatz des erfindungsgemäßen Verstellantriebs sind, dass eine verbesserte, definierte Verstellung erreicht werden kann, beispielsweise mit unterschiedlicher Verstellcharakteristik im Komfort- oder Bedienbereich und im Verstaubereich, und eine größere Designfreiheit bei der Konstruktion ermöglicht wird.

Die Erfindung betrifft weiterhin ein Verfahren zum Betrieb eines erfindungsgemäßen Verstellantriebs gemäß den vorangehend beschriebenen Ausführungen, umfassend eine Außen-Gewindespindel, die ein Außengewinde aufweist, dass in eine Spindelmutter eingreift, und die ein Innengewinde aufweist, in das eine Innen-Gewindespindel eingreift, wobei die Spindelmutter, die Außen-Gewindespindel und die Innen-Gewindespindel von einer motorischen Antriebseinheit relativ zueinander um eine Achse drehend antreibbar sind, bei dem erfindungsgemäß vorgesehen ist, dass in einem ersten Verstellbereich, dem sogenannten Verstaubereich, die Außen-Gewindespindel mit der Spindelmutter drehfest verriegelt wird, und die Außen-Gewindespindel durch Antrieb der Spindelmutter relativ zur Innen-Gewindespindel drehend angetrieben wird, und dass in einem zweiten Verstellbereich, dem Komfortverstellbereich, die Außen-Gewindespindel mit der Innen-Gewindespindel drehfest verriegelt wird, und die Spindelmutter relativ zur Außen-Gewindespindel drehend angetrieben wird.

Die oben zu dem erfindungsgemäßen Verstellantrieb und zur Lenksäule beschriebenen Ausführungen und Verfahrensschritte können einzeln oder in Kombinationen bei dem erfindungsgemäßen Verfahren angewendet werden. Durch die definierte, wahlweise Verriegelung von Spindelmutter und Außen-Gewindespindel oder Außen-Gewindespindel und Innen-Gewindespindel kann eine besser definierte Verstellcharakteristik als im Stand der Technik realisiert werden. Ein weiterer Vorteil ist die größere Designfreiheit und die die erhöhte Bedienungs- und Anwenderfreundlichkeit. Außerdem kann durch den besser definierten Bewegungsablauf beim Verstellen das Sicherheitsniveau für die Fahrzeuginsassen erhöht werden.

Das Verfahren kann vorzugsweise dadurch realisiert werden, dass zum Wechsel zwischen dem ersten und dem zweiten Verstellbereich eine Sperreinrichtung zwischen einer ersten und einer zweiten Stellung umgeschaltet wird und umgekehrt. Die Ausgestaltung kann beispielsweise wie oben für den Verstellantrieb beschrieben erfolgen.

Das Verfahren zur Verstellung eines oder mehrerer Verstellantriebe kann vorteilhaft zur Verstellung einer Lenksäule eingesetzt werden, beispielsweise zur Längs- und/oder Höhenverstellung.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: einen erfindungsgemäßen Verstellantrieb einer Lenksäule gemäß Figur 1 in einer schematischen perspektivischen Ansicht,
- Figur 3: einen Längsschnitt durch den Verstellantrieb gemäß Figur 2 entlang der Achse (Spindelachse),
- Figur 4: eine vergrößerte Detailansicht von Figur 3 in einer ersten Stellung,
- Figur 5: eine Ansicht wie in Figur 4 beim Umschalten in die zweite Stellung,
- Figur 6: eine Ansicht ähnlich Figur 5 in der zweiten Stellung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

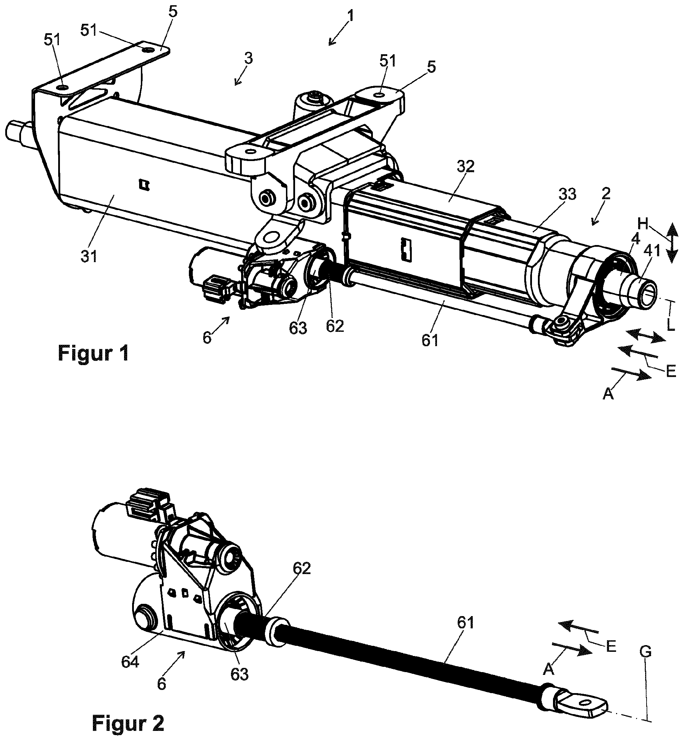

Figur 1 zeigt eine erfindungsgemäße Lenksäule 1 in einer perspektivischen Ansicht bezüglich der Fahrtrichtung von schräg hinten. Diese umfasst eine Stelleinheit 2 zur Eingabe von Lenkbefehlen, die eine Manteleinheit 3 mit drei Mantelrohren 31, 32, 33 aufweist, nämlich einem Außenmantelrohr 31, einem Zwischenmantelrohr 32 und einem Innenmantelrohr 33. Die Mantelrohre 31, 32 und 33 sind koaxial ineinander angeordnet und in Längsrichtung, dies entspricht der Achsrichtung einer Längsachse L, teleskopierend verschiebbar, wie mit dem Doppelpfeil angedeutet. Dabei ist die eine Verstellrichtung, in der die Mantelrohre 31, 32, 33 zur Verkürzung der Stelleinheit 2 in die Verstauposition bezüglich der Fahrtrichtung nach vorn, ineinander zusammen bewegt werden, d.h. eingefahren werden, die Einfahrrichtung E, welche gleichbedeutend als Vorwärts-Verstellrichtung E bezeichnet wird. Entsprechend ist die dieser entgegengesetzte Verstellrichtung, in der die Mantelrohre 31, 32, 33 aus der Verstauposition in Richtung einer Bedienposition auseinander bewegt werden, d.h. ausgefahren werden, die Ausfahrrichtung A oder Rückwärts-Verstellrichtung A, wie mit den jeweiligen Pfeilen angedeutet ist.

In der Manteleinheit 3 ist um die Längsachse L drehbar eine Lenkspindel 4 gelagert, die an ihrem hinteren Ende einen Anschlussabschnitt 41 zur Anbringung eines nicht dargestellten Lenkrads aufweist. Die Lenkspindel 4 ist ebenfalls in Achsrichtung zur Längsverstellung teleskopierbar ausgebildet.

Die Manteleinheit 3 ist in einer zweiteiligen Trageinheit 5 gehalten, welche Befestigungsmittel 51 zur Anbringung an einer nicht dargestellten Fahrzeugkarosserie aufweist.

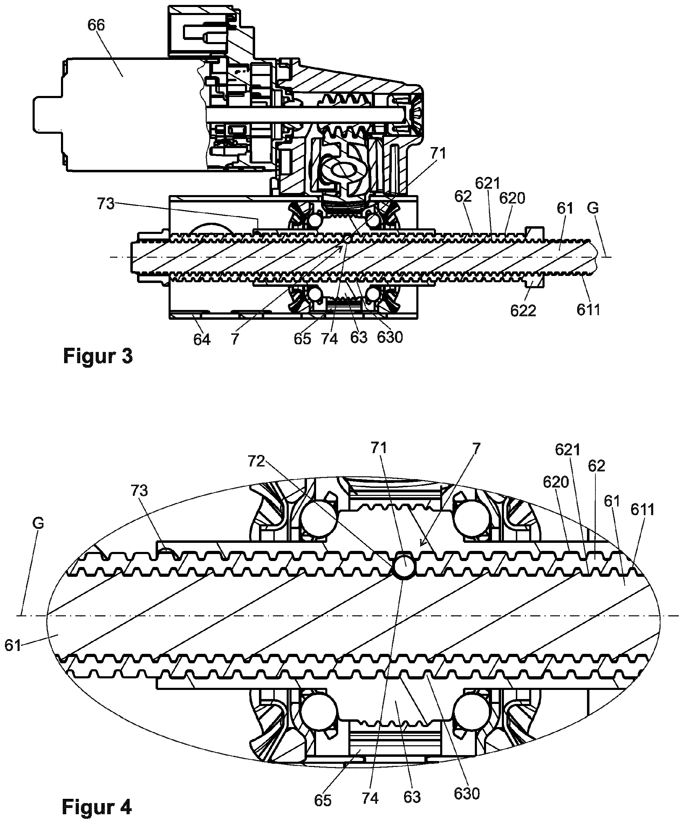

Ein Verstellantrieb 6, der in Figur 2 freigestellt gezeigt ist, dient zur relativen Längsverstellung der Mantelrohre 31, 32, 33 und weist eine Innen-Gewindespindel 61 und eine Außen-Gewindespindel 62 auf, die sich koaxial in Richtung einer Achse G, der Spindelachse, erstrecken, sowie eine Spindelmutter 63. Figur 3 zeigt einen Längsschnitt entlang dieser Achse G, und die Figuren 4, 5 und 6 vergrößerte Detailansichten daraus.

Die Außen-Gewindespindel 62 ist als rohrförmige Hohlspindel ausgeführt und weist ein Außengewinde 620 und ein dazu koaxiales Innengewinde 621 auf. Die Innen-Gewindespindel 61 weist ein Außengewinde 611 auf, mit dem sie in das Innengewinde 621 eingreift und so mit der Außen-Gewindespindel 62 einen ersten Spindeltrieb bildet.

Mit ihrem Außengewinde 620 ist die Außen-Gewindespindel 62 in ein Innengewinde 630 der Spindelmutter 63 eingeschraubt und bildet mit dieser zusammen einen zweiten Spindeltrieb, der mit dem besagten ersten Spindeltrieb geschachtelt, und wirkungsmäßig axial in Serie angeordnet ist.

Die Spindelmutter 63 ist um die Achse G drehbar im Gehäuse einer Antriebseinheit 64 gelagert, und fest mit einem Getrieberad 65 verbunden, welches beispielsweise wie im gezeigten Beispiel einen koaxial fest mit der Spindelmutter 63 verbundenen Zahnkranz aufweist. Von einem elektrischen Motor 66 ist das Getrieberad 65 samt der Spindelmutter 63 um die Achse G drehend antreibbar zum motorischen Antrieb der Spindeltriebe.

Die Innen-Gewindespindel 61 ist bezüglich Drehung um die Achse G fest mit dem Mantelrohr 33 verbunden, also unverdrehbar bezüglich des Verstellantriebs 6.

Eine erfindungsgemäße Sperreinrichtung 7 weist ein als Kugel 71 ausgebildetes Riegelelement auf, welches in einem radialen Durchbruch 72 der Außen-Gewindespindel 62 spielhaltig aufgenommen und quer zur Achse G bewegbar, dabei axial abgestützt gehalten ist. Der Durchbruch 72 kann als kreisrunde Bohrung ausgebildet sein mit einem größeren Innendurchmesser als dem Durchmesser der Kugel 71. Der Durchmesser der Kugel 71 ist so bemessen, dass die Kugel 71 entweder radial nach innen oder nach außen über die Außen-Gewindespindel 62 vorsteht.

Die Innen-Gewindespindel 61 weist außen eine radiale Vertiefung 74 auf, welche eine innere Riegelaufnahme oder Innenriegelaufnahme bildet, in welche die Kugel 71 durch Verlagerung nach innen eingreifen kann, wie in Figur 4 erkennbar ist. Durch die Kugel 71 ist die Vertiefung 74 nunmehr mit dem Durchbruch 72 formschlüssig verbunden. Dadurch nimmt die Sperreinrichtung 7 eine zweite Stellung ein, in der die Innen-Gewindespindel 61 mit der Außen-Gewindespindel 62 durch den Formschluss drehfest verriegelt und drehfest verbunden ist. Dadurch nimmt die Sperreinrichtung 7 die zweite Stellung ein (Figur 4).

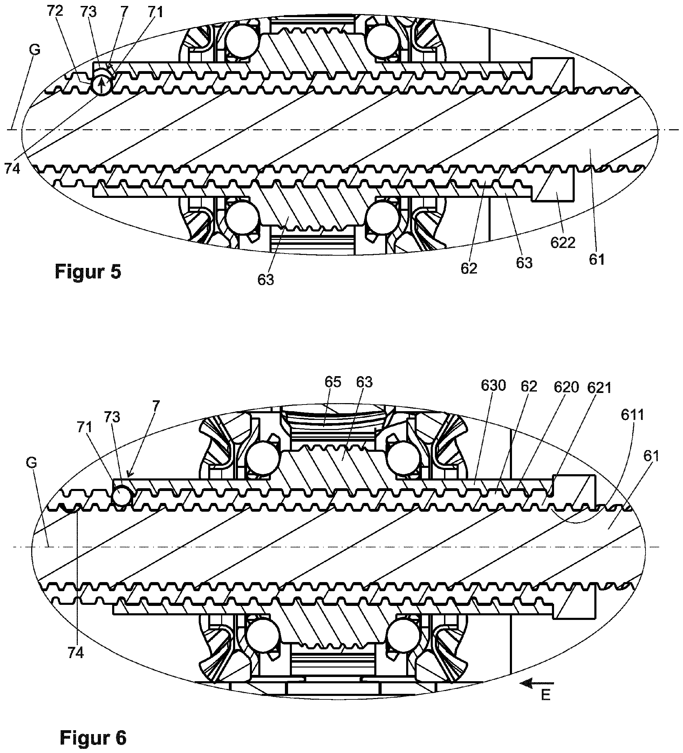

Die Spindelmutter 63 weist innen, im Bereich ihres Innengewindes 630 eine radiale Vertiefung 73 auf, welche eine äußere Riegelaufnahme oder Außenriegelaufnahme bildet, in welche die Kugel 71 durch Verlagerung nach außen formschlüssig eingreifen kann, wie in Figur 4 erkennbar ist. Durch die Kugel 71 ist die Vertiefung 73 mit dem Durchbruch 72 formschlüssig verbunden. Dadurch nimmt die Sperreinrichtung 7 eine erste Stellung ein, in der die Außen-Gewindespindel 62 mit der Spindelmutter 63 durch den Formschluss drehfest verriegelt und verbunden ist. Dadurch nimmt die Sperreinrichtung 7 die erste Stellung ein (Figur 6).

Die Außen-Gewindespindel 62 weist an einem Ende einen Anschlag 622 in Form eines radial über das Außengewinde radial nach außen vorstehenden Vorsprungs oder Kragens auf, der axial gegen die Spindelmutter 63 anschlagen kann, wenn die Außen-Gewindespindel 62 maximal in der Einfahr-Verstellrichtung E (= Vorwärts-Verstellrichtung) eingefahren ist, siehe Figur 6.

Figuren 3 und 4 zeigen exemplarisch eine Verstellsituation, in der sich die Lenksäule in dem Komfort- oder Bedienbereich befindet, in dem die Mantelrohre 31, 32, 33 in Längsrichtung ausgefahren sind. Wird die Spindelmutter 63 drehend angetrieben, wird die Außen-Gewindespindel 62 linear in der Vorwärts-Verstellrichtung E mitgenommen. Die Verstellgeschwindigkeit wird durch die Steigung von Innengewinde 630 und dem korrespondierenden Außengewinde 620 bestimmt. Dabei ist die Innen-Gewindespindel 61 durch die Riegeleinrichtung 7 wie in Figur 4 gezeigt derart drehfest verriegelt, dass sie mit der Außen-Gewindespindel 62 zusammen linear bewegt und verstellt wird.

Am Ende des Komfortbereichs schlägt der Anschlag 622 an der Spindelmutter 63 axial an und stoppt die linear Bewegung der Außen-Gewindespindel 62 relativ zur Spindelmutter 63. Dabei wird die in Figur 5 gezeigte Umschaltposition erreicht, in der die beiden Vertiefungen 73 und 74 sich im Bereich des Durchbruchs 72 radial gegenüberliegen.

Dadurch kann die Kugel 71 sich in der Umschaltposition aus der inneren Vertiefung 74 heraus bewegen, und, wie in Figur 5 mit dem Pfeil angedeutet, und sich in dem Durchbruch 72 nach außen bewegen, bis sie formschlüssig in die äußere Vertiefung 73 eingreift, wie in Figur 6 dargestellt. Dadurch wird die drehfeste Verriegelung zwischen Innen-Gewindespindel 61 und Außen-Gewindespindel 62 gelöst, und die Sperreinrichtung 7 in eine erste Stellung umgeschaltet, in der die Außen-Gewindespindel 62 nunmehr mit der Spindelmutter 63 drehfest verriegelt ist.

Bei einem weiteren drehenden Antrieb der Spindelmutter 63 wird die Außen-Gewindespindel 62 zusammen mit dieser rotiert, und die Innen-Gewindespindel 61 linear zur Außen-Gewindespindel verstellt. Dabei wird die Verstellgeschwindigkeit durch die Steigung von Innengewinde 621 und dem korrespondierenden Außengewinde 611 bestimmt. Dadurch, dass diese Steigung größer sein kann als die Steigung des Gewindes zwischen Außen-Gewindespindel 62 und Spindelmutter 63, kann bei einer gegebenen Drehzahl der Antriebseinheit 64 eine schnellere Verstellung im Verstaubereich bis zum Erreichen der vorderen Verstauposition erfolgen.

Die Vertiefungen 73 und 74 können in axialer Richtung geneigte Betätigungsschrägen aufweisen, so dass die Kugel 71 beim Durchlaufen der in Figur 5 gezeigten Umschaltposition selbsttätig nach innen oder nach außen bewegt wird, um je nach Verstellrichtung eine Umschaltung zwischen der ersten und der zweiten Stellung oder umgekehrt zu bewirken.

### Bezugszeichenliste

- 1: Lenksäule
- 2: Stelleinheit
- 3: Manteleinheit
- 31: Außenmantelrohr
- 32: Zwischenmantelrohr
- 33: Innenmantelrohr
- 4: Lenkspindel
- 41: Anschlussabschnitt
- 5: Trageinheit
- 51: Befestigungsmittel
- 6: Verstellantrieb
- 61: Innen-Gewindespindel
- 610: Außengewinde
- 62: Außen-Gewindespindel
- 620: Außengewinde
- 621: Innengewinde
- 622: Anschlag
- 63: Spindelmutter
- 630: Innengewinde
- 64: Antriebseinheit
- 65: Getrieberad
- 66: Motor
- 7: Sperreinrichtung
- 71: Kugel (Riegelelement)
- 72: Durchbruch
- 73,: 74 Vertiefung

- L: Längsachse
- G: Achse (Spindelachse)
- E: Vorwärts-Verstellrichtung (Einfahr-Verstellrichtung)
- A: Rückwärts-Verstellrichtung (Ausfahr-Verstellrichtung)

## Patentansprüche

1. Verstellantrieb (6) für eine motorisch verstellbare Lenksäule (1) für ein Kraftfahrzeug, umfassend eine Außen-Gewindespindel (62), die ein Außengewinde (620) aufweist, das in eine Spindelmutter (63) eingreift, und die ein Innengewinde (621) aufweist, in das eine Innen-Gewindespindel (61) eingreift, wobei die Spindelmutter (63), die Außen-Gewindespindel (62) und die Innen-Gewindespindel (61) von einer motorischen Antriebseinheit (64) relativ zueinander um eine Achse (G) drehend antreibbar sind, **dadurch gekennzeichnet,**
**dass** eine Sperreinrichtung (7) vorgesehen ist, die umschaltbar ist zwischen einer ersten Stellung und einer zweiten Stellung, wobei in der ersten Stellung die Außen-Gewindespindel (62) mit der Spindelmutter (63) drehfest verriegelt ist, und in der zweiten Stellung die Außen-Gewindespindel (62) mit der Innen-Gewindespindel (61) drehfest verriegelt ist.

2. Verstellantrieb (6) nach Anspruch 1, **dadurch gekennzeichnet, dass** die Sperreinrichtung (7) mit der Spindelmutter (63), der Außen-Gewindespindel (62) und der Innen-Gewindespindel (61) zusammenwirkt, um an einer vorbestimmten Relativposition aus einer Vorwärts-Verstellrichtung (E) von der zweiten in die erste Stellung umgeschaltet zu werden, und an der Relativposition aus einer der Vorwärts-Verstellrichtung ( E) entgegengesetzten Rückwärts-Verstellrichtung (A) von der ersten in die zweite Stellung umgeschaltet zu werden.

3. Verstellantrieb (6) nach einem der vorangehenden Ansprüche, **dadurch gekennzeichnet, dass** die Sperreinrichtung (7) ein zwischen der ersten Stellung und der zweiten Stellung verlagerbares Riegelelement (71) aufweist.

4. Verstellantrieb (6) nach Anspruch 3, **dadurch gekennzeichnet, dass** das Riegelelement (71) an der Außen-Gewindespindel (62) bewegbar gelagert ist und wahlweise in Riegeleingriff bringbar ist mit einer Riegelaufnahme (73) der Spindelmutter (63) oder einer Riegelaufnahme (74) der Innen-Gewindespindel (61).

5. Verstellantrieb (6) nach Anspruch 4, **dadurch gekennzeichnet, dass** eine Riegelaufnahme (73, 74) eine in der Spindelmutter (63) und/oder der Innen-Gewindespindel (61) eingebrachte Vertiefung (73, 74) aufweist.

6. Verstellantrieb (6) nach einem der vorangehenden Ansprüche 3 bis 5, **dadurch gekennzeichnet, dass** das Riegelelement (71) in einem Durchbruch (72) der Außen-Gewindespindel (62) angeordnet ist.

7. Verstellantrieb (6) nach einem der vorangehenden Ansprüche 3 bis 6, **dadurch gekennzeichnet, dass** die Spindelmutter (63) ein erstes Betätigungsmittel aufweist, welches eingerichtet ist, um das Riegelelement (71) von der ersten Stellung in die zweite Stellung umzuschalten, und die Innen-Gewindespindel (61) ein zweites Betätigungsmittel aufweist, welches eingerichtet ist, um das Riegelelement (71) von der zweiten Stellung in die erste Stellung umzuschalten.

8. Verstellantrieb (6) nach einem der vorangehenden Ansprüche, **dadurch gekennzeichnet, dass** die Außen-Gewindespindel (62) ein in axialer Richtung gegen die Spindelmutter (63) in Anschlag bringbares Begrenzungsmittel (622) aufweist.

9. Verstellantrieb (6) nach einem der vorangehenden Ansprüche, **dadurch gekennzeichnet, dass** das Außengewinde (620) der Außen-Gewindespindel (62) eine von dem Innengewinde (621) der Außen-Gewindespindel (62) unterschiedliche Steigung hat.

10. Verstellantrieb (6) nach Anspruch 9, **dadurch gekennzeichnet, dass** das Innengewinde (621) eine größere Steigung als das Außengewinde (620) hat.

11. Verstellantrieb (6) nach einem der vorangehenden Ansprüche 9 oder 10, **dadurch gekennzeichnet, dass** mindestens eines der Gewinde (620, 621) selbsthemmend ausgestaltet ist.

12. Lenksäule (1) für ein Kraftfahrzeug, umfassend einen Verstellantrieb (6) nach einem der vorangehenden Ansprüche 1 bis 11, der zwischen axial relativ zueinander teleskopartig verstellbaren, eine Lenkspindel (4) drehbar lagernden Mantelrohren (31, 32, 33) einer Manteleinheit (3) angeordnet ist und/oder zwischen einer mit der Karosserie des Kraftfahrzeugs verbindbaren Trageinheit (5) und einer eine Lenkspindel (4) drehbar aufnehmenden Manteleinheit (3) angeordnet ist.

13. Verfahren zum Betrieb eines Verstellantriebs (6) nach einem der vorangehenden Ansprüche 1 bis 11,
**gekennzeichnet dadurch,**
**dass** in einem ersten Verstellbereich die Außen-Gewindespindel (62) mit der Spindelmutter (63) drehfest verriegelt wird, und die Außen-Gewindespindel (62) relativ zur Innen-Gewindespindel (61) drehend angetrieben wird, und dass in einem zweiten Verstellbereich die Außen-Gewindespindel (62) mit der Innen-Gewindespindel (61) drehfest verriegelt wird, und die Spindelmutter (63) relativ zur Außen-Gewindespindel (62) drehend angetrieben wird.

14. Verfahren nach Anspruch 13, **dadurch gekennzeichnet, dass** zum Wechsel zwischen dem ersten und dem zweiten Verstellbereich eine Sperreinrichtung (7) zwischen einer ersten und einer zweiten Stellung umgeschaltet wird und umgekehrt.

15. Verfahren zum Verstellen einer motorisch verstellbaren Lenksäule (1) für ein Kraftfahrzeug nach Anspruch 12, wobei der Verstellantrieb (6) gemäß dem Verfahren nach Anspruch 13 betrieben wird.

## Claims

1. Adjusting drive (6) for a motor-adjustable steering column (1) for a motor vehicle, comprising an external threaded spindle (62) which has an external thread (620) which engages in a spindle nut (63), and which has an internal thread (621) in which an internal threaded spindle (61) engages, wherein the spindle nut (63), the external threaded spindle (62) and the internal threaded spindle (61) can be driven in rotation relative to one another about an axis (G) by a motorised drive unit (64),
**characterised in**
**in that** a locking device (7) is provided which can be switched over between a first position and a second position, wherein in the first position the external threaded spindle (62) is locked in a rotationally fixed manner with the spindle nut (63), and in the second position the external threaded spindle (62) is locked in a rotationally fixed manner with the internal threaded spindle (61).

2. Adjusting drive (6) according to claim 1, **characterised in that** the locking device (7) cooperates with the spindle nut (63), the external threaded spindle (62) and the internal threaded spindle (61) in order to be switched from the second to the first position at a predetermined relative position from a forward adjusting direction (E), and to be switched from the first to the second position at the relative position from a reverse adjusting direction (A) opposite to the forward adjusting direction ( E).

3. Adjusting drive (6) according to one of the preceding claims, **characterised in that** the locking device (7) has a locking element (71) which can be displaced between the first position and the second position.

4. Adjusting drive (6) according to claim 3, **characterised in that** the locking element (71) is movably mounted on the external threaded spindle (62) and can optionally be brought into locking engagement with a locking receptacle (73) of the spindle nut (63) or a locking receptacle (74) of the internal threaded spindle (61).

5. Adjusting drive (6) according to claim 4, **characterised in that** a bolt receptacle (73, 74) has a recess (73, 74) formed in the spindle nut (63) and/or the internal threaded spindle (61).

6. Adjusting drive (6) according to one of the preceding claims 3 to 5, **characterised in that** the locking element (71) is arranged in an aperture (72) of the external threaded spindle (62).

7. Adjusting drive (6) according to one of the preceding claims 3 to 6, **characterised in that** the spindle nut (63) has a first actuating means which is arranged to switch the locking element (71) from the first position to the second position, and the internal threaded spindle (61) has a second actuating means which is arranged to switch the locking element (71) from the second position to the first position.

8. Adjusting drive (6) according to one of the preceding claims, **characterised in that** the external threaded spindle (62) has a limiting means (622) which can be brought into abutment in the axial direction against the spindle nut (63).

9. Adjusting drive (6) according to one of the preceding claims, **characterised in that** the external thread (620) of the external threaded spindle (62) has a different pitch from the internal thread (621) of the external threaded spindle (62).

10. Adjusting drive (6) according to claim 9, **characterised in that** the internal thread (621) has a greater pitch than the external thread (620).

11. Adjusting drive (6) according to one of the preceding claims 9 or 10, **characterised in that** at least one of the threads (620, 621) is designed to be self-locking.

12. Steering column (1) for a motor vehicle, comprising an adjusting drive (6) according to one of the preceding claims 1 to 11, which is arranged between casing tubes (31, 32, 33) of a casing unit (3) which are axially telescopically adjustable relative to one another and rotatably support a steering spindle (4) and/or is arranged between a support unit (5) which can be connected to the body of the motor vehicle and a casing unit (3) which rotatably receives a steering spindle (4).

13. Method for operating an adjusting drive (6) according to one of the preceding claims 1 to 11,
**characterised in that**
**in that**, in a first adjustment range, the external threaded spindle (62) is locked to the spindle nut (63) in a rotationally fixed manner, and the external threaded spindle (62) is driven in rotation relative to the internal threaded spindle (61), and **in that**, in a second adjustment range, the external threaded spindle (62) is locked to the internal threaded spindle (61) in a rotationally fixed manner, and the spindle nut (63) is driven in rotation relative to the external threaded spindle (62).

14. Method according to claim 13, **characterised in that** a locking device (7) is switched between a first and a second position and vice versa in order to change between the first and the second adjustment range.

15. Method for adjusting a motorised adjustable steering column (1) for a motor vehicle according to claim 12, wherein the adjusting drive (6) is operated according to the method according to claim 13.

## Revendications

1. Entraînement de réglage (6) pour une colonne de direction (1) réglable par moteur pour un véhicule automobile, comprenant une broche filetée extérieure (62) qui présente un filetage extérieur (620) qui s'engage dans un écrou de broche (63), et qui présente un filetage intérieur (621), dans lequel s'engage une broche à filetage intérieur (61), l'écrou de broche (63), la broche à filetage extérieur (62) et la broche à filetage intérieur (61) pouvant être entraînés en rotation les uns par rapport aux autres autour d'un axe (G) par une unité d'entraînement motorisée (64),
**caractérisé en ce que**
**en ce qu'**il est prévu un dispositif de blocage (7) qui peut être commuté entre une première position et une deuxième position, la broche filetée extérieure (62) étant verrouillée en rotation avec l'écrou de broche (63) dans la première position, et la broche filetée extérieure (62) étant verrouillée en rotation avec la broche filetée intérieure (61) dans la deuxième position.

2. Entraînement de réglage (6) selon la revendication 1, **caractérisé en ce que** le dispositif de blocage (7) coopère avec l'écrou de tige (63), la tige filetée extérieure (62) et la tige filetée intérieure (61) pour être commuté de la deuxième à la première position dans une position relative prédéterminée à partir d'un sens de déplacement vers l'avant (E), et pour être commuté de la première à la deuxième position dans la position relative à partir d'un sens de déplacement vers l'arrière (A) opposé au sens de déplacement vers l'avant ( E).

3. Entraînement de réglage (6) selon l'une des revendications précédentes, **caractérisé en ce que** le dispositif de blocage (7) comporte un élément de verrouillage (71) déplaçable entre la première position et la deuxième position.

4. Entraînement de réglage (6) selon la revendication 3, **caractérisé en ce que** l'élément de verrouillage (71) est monté mobile sur la broche filetée extérieure (62) et peut être amené au choix en engagement de verrouillage avec un logement de verrouillage (73) de l'écrou de broche (63) ou un logement de verrouillage (74) de la broche filetée intérieure (61).

5. Entraînement de réglage (6) selon la revendication 4, **caractérisé en ce qu'**un logement de verrou (73, 74) présente un renfoncement (73, 74) réalisé dans l'écrou de broche (63) et/ou la broche à filetage intérieur (61).

6. Entraînement de réglage (6) selon l'une des revendications précédentes 3 à 5, **caractérisé en ce que** l'élément de verrouillage (71) est disposé dans un passage (72) de la tige filetée extérieure (62).

7. Entraînement de réglage (6) selon l'une quelconque des revendications 3 à 6 précédentes, **caractérisé en ce que** l'écrou de tige (63) comprend un premier moyen d'actionnement agencé pour faire passer l'élément de verrouillage (71) de la première position à la deuxième position, et la tige à filetage interne (61) comprend un deuxième moyen d'actionnement agencé pour faire passer l'élément de verrouillage (71) de la deuxième position à la première position.

8. Entraînement de réglage (6) selon l'une des revendications précédentes, **caractérisé en ce que** la vis à filetage extérieur (62) présente un moyen de limitation (622) pouvant être mis en butée dans le sens axial contre l'écrou de la vis (63).

9. Entraînement de réglage (6) selon l'une des revendications précédentes, **caractérisé en ce que** le filetage extérieur (620) de la tige filetée extérieure (62) a un pas différent du filetage intérieur (621) de la tige filetée extérieure (62).

10. Entraînement de réglage (6) selon la revendication 9, **caractérisé en ce que** le filetage intérieur (621) a un pas plus grand que le filetage extérieur (620).

11. Entraînement de réglage (6) selon l'une des revendications 9 ou 10 précédentes, **caractérisé en ce qu'**au moins l'un des filets (620, 621) est conçu de manière autobloquante.

12. Colonne de direction (1) pour un véhicule automobile, comprenant un entraînement de réglage (6) selon l'une des revendications précédentes 1 à 11, qui est disposé entre des tubes d'enveloppe (31, 32, 33) d'une unité d'enveloppe (3), réglables axialement les uns par rapport aux autres de manière télescopique et supportant en rotation un arbre de direction (4), et/ou qui est disposé entre une unité de support (5) pouvant être reliée à la carrosserie du véhicule automobile et une unité d'enveloppe (3) recevant en rotation un arbre de direction (4).

13. Procédé de fonctionnement d'un entraînement de réglage (6) selon l'une des revendications 1 à 11 précédentes,
**caractérisé en ce que**
**en ce que**, dans une première plage de réglage, la broche filetée extérieure (62) est verrouillée en rotation avec l'écrou de broche (63), et la broche filetée extérieure (62) est entraînée en rotation par rapport à la broche filetée intérieure (61), et **en ce que**, dans une deuxième plage de réglage, la broche filetée extérieure (62) est verrouillée en rotation avec la broche filetée intérieure (61), et l'écrou de broche (63) est entraîné en rotation par rapport à la broche filetée extérieure (62).

14. Procédé selon la revendication 13, **caractérisé en ce que**, pour passer de la première à la deuxième plage de réglage, un dispositif de blocage (7) est commuté entre une première et une deuxième position, et inversement.

15. Procédé de réglage d'une colonne de direction (1) réglable par moteur pour un véhicule automobile selon la revendication 12, dans lequel l'entraînement de réglage (6) est exploité selon le procédé de la revendication 13.
